Europäisches Patentamt

European Patent Office

Office européen des brevets

(11) Veröffentlichungsnummer: **0 262 616**
**A2**

(12) **EUROPÄISCHE PATENTANMELDUNG**

(21) Anmeldenummer: 87114056.2

(22) Anmeldetag: 25.09.87

(51) Int. Cl.4: **G09B 5/06** , B42D 3/12 , B42F 13/40

(30) Priorität: 30.09.86 DE 8626080 U
04.02.87 DE 8701687 U
19.02.87 DE 8702569 U

(43) Veröffentlichungstag der Anmeldung:
06.04.88 Patentblatt 88/14

(84) Benannte Vertragsstaaten:
DE FR GB IT

(71) Anmelder: **Landa, Norbert**

**A-9131 Pubersdorf 7(AT)**

(72) Erfinder: **Landa, Norbert**

**A-9131 Pubersdorf 7(AT)**

(74) Vertreter: **Liedl, Gerhard**
**Patentanwälte Liedl, Nöth Steinsdorfstrasse 21-22**
**D-8000 München 22(DE)**

(54) Vorrichtung zur audi-visuellen Kombination von Textinhalten mit Sprachinhalten.

(57) Eine Vorrichtung in Form eines Bucheinbandes enthält einen auswechselbaren Block von bedruckten oder beschriebenen Blättern, eine Speichereinheit für Tonsignale in Form eines Tonbandabspielgerätes mit den dazugehörigen Lautsprechern oder Kopfhörern einschließlich einer Tonbandkassette sowie eine Steuereinheit zur Zuordnung der Tonsignale zu den Text-und Bildinhalten, wobei je nachdem, welche Seite des Blockes aufgeschlagen wird, die zugehörige Stelle des Tonbandes angesteuert wird.

EP 0 262 616 A2

## Vorrichtung zur audio-visuellen Kombination von Textinhalten mit Sprachinhalten

Die Erfindung bezieht sich auf eine Vorrichtung zur audio-visuellen Kombination von Text-und Bildinhalten in Form eines Blockes aufeinanderliegender, bedruckter und beschriebener Seiten einerseits und Sprach-und Musikinhalten in Form eines Tonspeichers andererseits.

Aus der europäischen Patentanmeldung 0 172 313 sind Bücher bekannt, welche Ausnehmungen für Tonträger-Kassetten besitzen. Dies soll gewährleisten, daß eine dem Buch zugeordnete Tonträger-Kassette immer beim Buch verbleibt und dementsprechend nicht verloren geht oder in eine andere Sammlung von Tonträger-Kassetten gelangt. Derartige Tonträger-Kassetten müssen jedoch erst in ein Tonbandgerät eingelegt werden. Eine Verbindung zwischen einer bestimmten aufgeschlagenen Seite des Buches und einer bestimmten Stelle des Tonbandes ist nicht gegeben.

Bei diesen Vorrichtungen können also die Seiten des Buchblockes nur nacheinander und nach Ablauf einer bestimmten Zeitspanne umgeblättert werden. Die Vorrichtungen sind dementsprechend für Kinderbücher nicht geeignet, da dem Kind nicht verwehrt werden kann, irgendeine bestimmte Seite aufzuschlagen und von dieser ausgehend, vor-oder rückwärts umzublättern. Weiterhin eignen sich derartige Vorrichtungen nicht für Spezialzwecke, z.B. Blindenbücher, bei denen ein Text oder ein Verzeichnis in Blindenschrift durch gesprochene Informationen ergänzt wird. Ähnliches gilt für andere Unterrichts-und Lehrzwecke.

Hier will die Erfindung Abhilfe schaffen. Die Erfindung, wie sie in den Ansprüchen gekennzeichnet ist, löst die Aufgabe, eine Vorrichtung zur audio-visuellen Kombination von Text-und Bildinhalten einerseits und Sprach-und Musikinhalten andererseits mit wahlweise aufschlagbaren bedruckten Blättern eines entsprechenden Blockes zu - schaffen, bei der unabhängig davon, welche Seite aufgeschlagen wird, der zu dieser Seite passende Text oder eine entsprechende Musikuntermalung abgespielt wird.

Die Vorrichtung ist so ausgebildet, daß bei Aufschlagen einer bestimmten Seite von einer Steuereinrichtung erkannt wird, ob der Text im Sinne einer steigenden Seitenanzahl oder einer abnehmenden Seitenanzahl umgeblättert wurde und wobei das Tonband im Schnellauf zu der der aufgeschlagenen Seite entsprechenden Text-oder Musik stelle vor-oder zurückgespult wird.

Es sollen also neuartige Lernmethoden und Unterhaltungsmöglichkeiten geschaffen werden, wobei die Bedienung so vereinfacht wird, daß sie auch von Kindern oder Jugendlichen vorgenommen werden kann.

Im folgenden wird die Erfindung anhand von verschiedenen Ausführungswegen darstellenden Zeichnungen näher erläutert. Es zeigen:

Fig. 1 eine Draufsicht auf eine Vorrichtung in Buchform ohne die auswechselbaren Textseiten und ohne eingelegte Tonbandkassette;

Fig. 2 eine Draufsicht ähnlich Fig.1, nachdem die Textseiten eingelegt wurden;

Fig. 3 eine Draufsicht auf die Vorrichtung nach Schließen des Einbanddeckels;

Fig. 4 eine Schnittansicht längs der Linie IV-IV in Fig.1;

Fig. 5 eine schematische Schnittansicht einer zweiten Ausführungsform der Vorrichtung mit eingelegten Textseiten;

Fig. 6 eine Draufsicht auf die aufgeschlagene Vorrichtung gemäß Fig. 5;

Fig. 7 eine Schnittansicht einer weiteren Ausführungsform der Vorrichtung;

Fig. 8 eine Schnittansicht längs der Linie VIII-VIII in Fig. 6;

Fig. 9 eine perspektivische Ansicht von - schräg oben und rechts vorne auf die halb aufgeschlagene Vorrichtung nach Fig. 6;

Fig.10 eine Draufsicht auf eine dritte Ausführungsform;

Fig.11 eine Schnittansicht längs der Linie XI in Fig. 10;

Fig.12 eine schematische perspektivische Ansicht von schräg oben und rechts vorne auf die vierte Ausführungsform, wobei der Bucheinband halb aufgeschlagen ist mit im Abstand voneinander angeordneten Seiten;

Fig. 13 eine schematische Darstellung einer weiteren Ausführungsform der Vorrichtung und

Fig. 14 eine Schnittansicht längs der Linie XIV-XIV in Fig. 13.

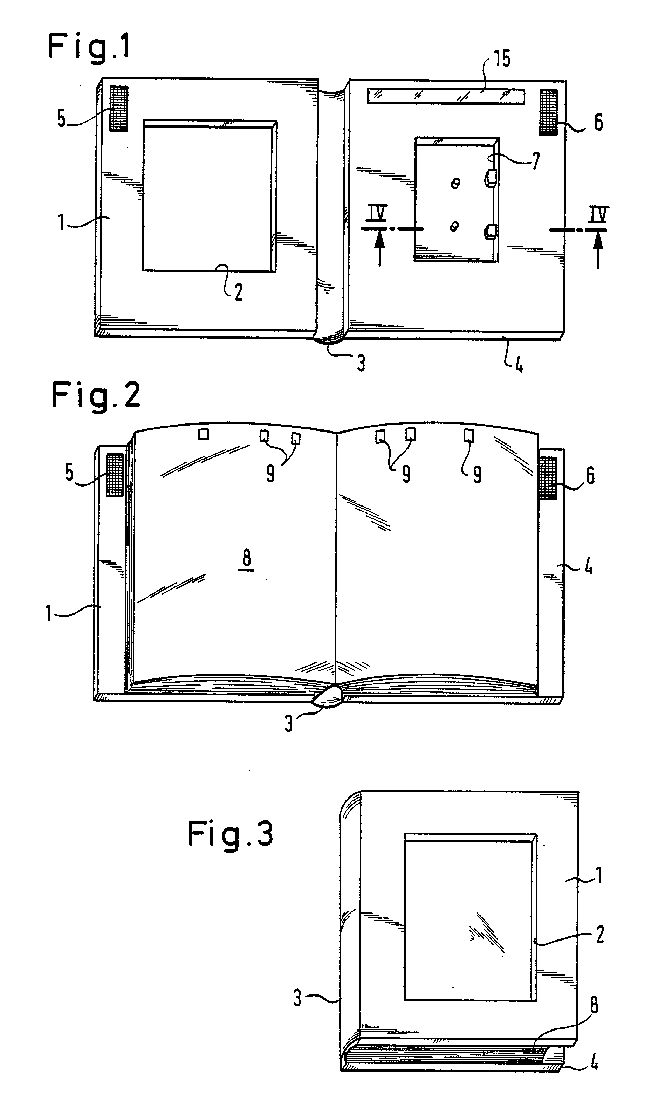

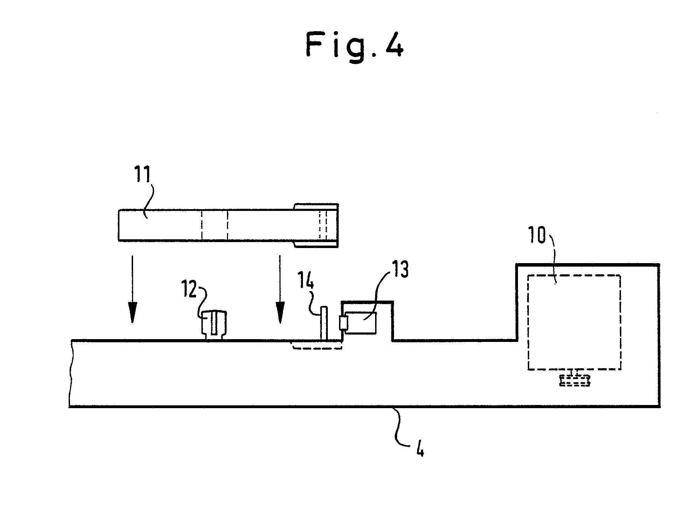

Die Vorrichtung besteht, wie dies Fig. 1 zeigt, aus einem vorderen Deckel 1 mit einer größeren Aussparung 2 und einem an diesem mittels einem biegsamen Falz 3 befestigten Rückdeckel 4. Der vordere Deckel 1 enthält einen Lautspecher 5 und der rückwärtige Deckel 4 einen Lautsprecher 6. Im aufgeschlagenen Zustand besitzen also die beiden Lautsprecher einen für die Übertragung stereophoner Musik ausreichenden Abstand. Der rückwärtige Deckel 4 besitzt eine Ausnehmung 7 zur Aufnahme einer Tonbandkassette in dieses Gerät, wie diese - schematisch im Schnitt in Fig. 4 dargestellt ist. Weiterhin enthält der rückwärtige Deckel 4 eine Einrichtung, die feststellt, welche Seite des Blockes aufgeschlagen ist und zwar bei der Ausführungsform nach Fig. 1 in Form einer streifenförmigen fotoelektrischen Einrichtung 15.

In die Vorrichtung in Form eines Bucheinbandes wird, wie in Fig. 2 gezeigt, auswechselbar ein Text-und/oder Bilderblock 8 eingesetzt. Dabei kann es sich um einen Block aufeinanderliegender bedruckter oder beschriebener Blätter handeln. Dies kann z.B. dadurch geschehen, indem Längsschnitte links und rechts in dem Bucheinband Laschen auf der ersten und letzten Seite des Text-und/oder Bilderblockes aufnehmen, womit dieser fixiert ist. Der in Fig. 2 abgebildete Text-und/oder Bilderblock 8 besitzt an der Stelle, an der er auf der streifenförmigen fotoelektrischen Einrichtung 15 aufliegt, Aussparungen 9, z.B. entsprechend der Seitenanzahl, wobei bei jeder nachfolgenden Seite eine Aussparung hinzugefügt oder weggelassen ist. Die lichtempfindliche Einrichtung 15 registriert dementsprechend, wieviele Aussparungen 9 sich in Deckung befinden und eine durchgehende Öffnung für das einfällende Licht auf die lichtempfindliche Einrichtung bilden und damit die Seitenanzahl. Entsprechend kann festgestellt werden, welche Seite des Blockes aufgeschlagen ist und die Abspieleinrichtung veranlaßt werden, die dieser Seite zugeordnete Stelle des Tonträgers abzuspielen.

Wie aus Fig. 3 ersichtlich, ist bei geschlossenem Bucheinband die Titelseite des eingelegten Text-und/oder Bilderblockes von außen zu sehen.

Fig. 4 zeigt, daß eine Kassette 11 von oben auf Aufwickel-bzw. Abwickeldorne 12 aufgesetzt wird, wobei das in der Kassette 11 befindliche Tonband von einem Tonkopf 13 abgetastet wird und eine entsprechende Welle 14 für den Vortrieb des Tonbandes sorgt. Dabei kann das Tonband im - schnellen Vor-und Rücklauf angetrieben werden. Dadurch, daß die Steuereinrichtung Mittel enthält, durch welche festgestellt wird, ob der Block im Sinne steigender oder fallender Seitenanzahl umgeblättert wird, wird das Tonband entsprechend im schnellen Vorlauf oder im schnellen Rücklauf angetrieben. Ferner enthält das Tonband eine Spur, auf welcher magnetische Markierungen für den Beginn einer Seite des Blockes und der zugehörigen Text-bzw. Toninformationen vorgesehen sind, wobei die Abspieleinrichtung des Tonbandes in die normale Abspielgeschwindigkeit bei Erreichen der der aufgeschlagenen Seite entsprechenden Markierungen umschaltet. Ein Motor 10 treibt das Bandgerät an.

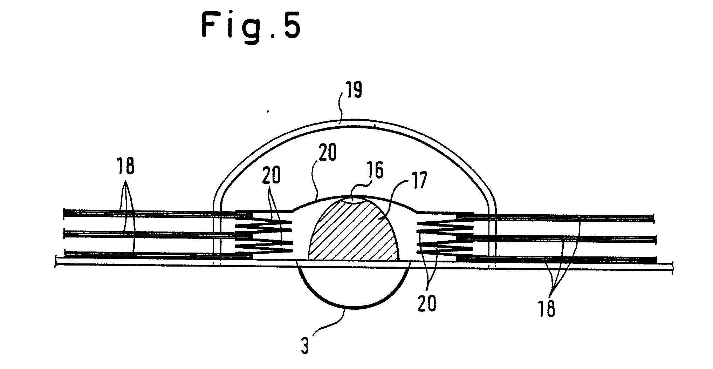

In Fig. 5 wird eine weitere Möglichkeit der Steuerung, die das Einschalten des Tonträgerabspielgerätes durch das Aufschlagen der Buchseiten veranlaßt, näher erläutert. Dabei sind jeweils zwei aufeinanderfolgende Blätter 18 an ihrem linken Rand mit mindestens einem Band 20 verbunden. Die in der Abbildung auf beiden Seiten des Mittelstegs 17 skizzierten Blätter 18 erhalten die notwendige Führung beim Umblättern durch einen Führungsring 19. Wird nun ein Blatt 18 umgeblättert, spannt sich das an ihm befestigte Band 20 über den mit einer lichtempfindlichen Einrichtung 16 wie z.B. einer Fotozelle versehenen Mittelsteg 17. Die in Abbildung 5 gezeigten Bänder 20 enthalten jeweils unterschiedliche Markierungen. Somit kann die Steuerung mittels der lichtempfindlichen Einrichtung 16 das integrierte Tonträgerabspielgerät schalten. Die Bänder 20 sind so gestaltet, daß sie sich im zusammengelegten Zustand nach innen falten müssen.

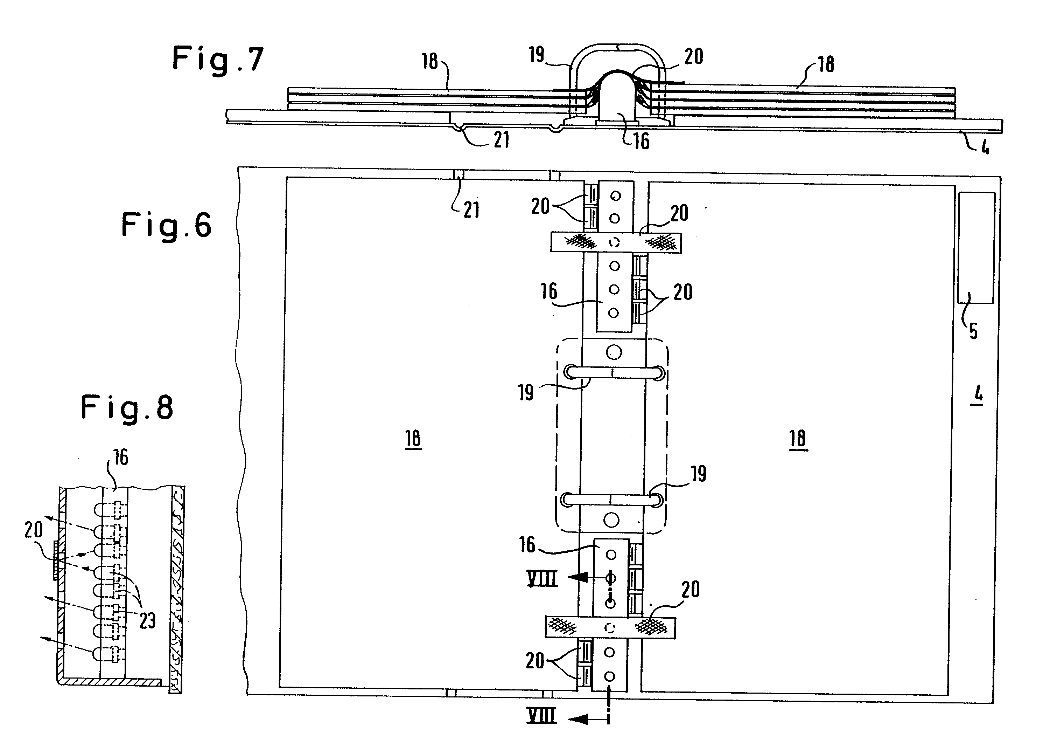

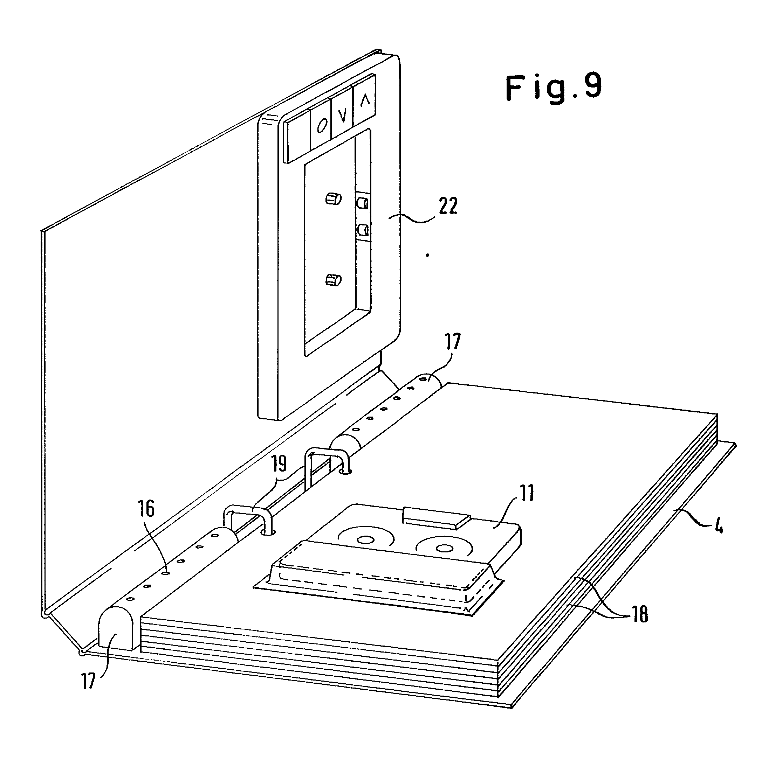

In Fig. 6 und 7 wird gezeigt, daß die lichtempfindliche Einrichtung 16 auch auf die Lage des Bandes 20 ansprechen kann und dadurch das Tonabspielgerät steuert. Dabei werden die Bänder 20 jeweils zwischen zwei nebeneinanderliegenden Blättern 18 an unterschiedlicher Stelle befestigt, so daß sie unterschiedliche lichtempfindliche Einrichtungen 16 beim Umblättern abdecken. Die Seiten des Text-und/oder Bilderblockes sind mittels eines Führungsrings 19 in Ringheftung zusammengehalten, welche im Falz des in Form eines Bucheinbandes ausgestalteten Gerätes festgeklemmt ist und bei der auf der letzten Seite des Blockes eine Tonbandkassette 11 angeheftet sein kann, wie dies in Fig. 9 gezeigt wird, die vor Inbetriebnahme in die entsprechende Halterung des in dem Bucheinband eingebauten Abspielgerätes 22 eingesetzt wird. In Abbildung 6 und 7 wird weiterhin eine Aufnahme für einen elektronischen Speicherchip 21 gezeigt, die hier im rückwärtigen Deckel angeordnet ist. Selbstverständlich ist es möglich diese Aufnahme für einen elektronischen Speicherchip auch an anderen Stellen des Bucheinbandes vorzusehen.

In Fig. 8 wird der Strahlengang der Infrarotlichtquellen 23 gezeigt. Legt sich nun ein Band 20, welches zwei aufeinanderfolgende Blätter miteinander verbindet, das entsprechend beschichtet ist, über bestimmte Infrarotlichtquellen, so wird das Infrarotlicht codeartig reflektiert und aus dem Ansprechen der integrierten lichtempfindlichen Elemente wie z.B. Fotozellen auf das Infrarotlicht wird die aufgeschlagene Seite ermittelt.

In Fig. 9 wird ein halbgeöffneter Bucheinband gezeigt, bei dem sich alle Blätte 18 auf der rechten Seiten, also dem rückwärtigen Deckel 4 befinden. Wie bereits erwähnt, kann die Kassette 11 direkt auf einem Blatt 18 befestigt sein.

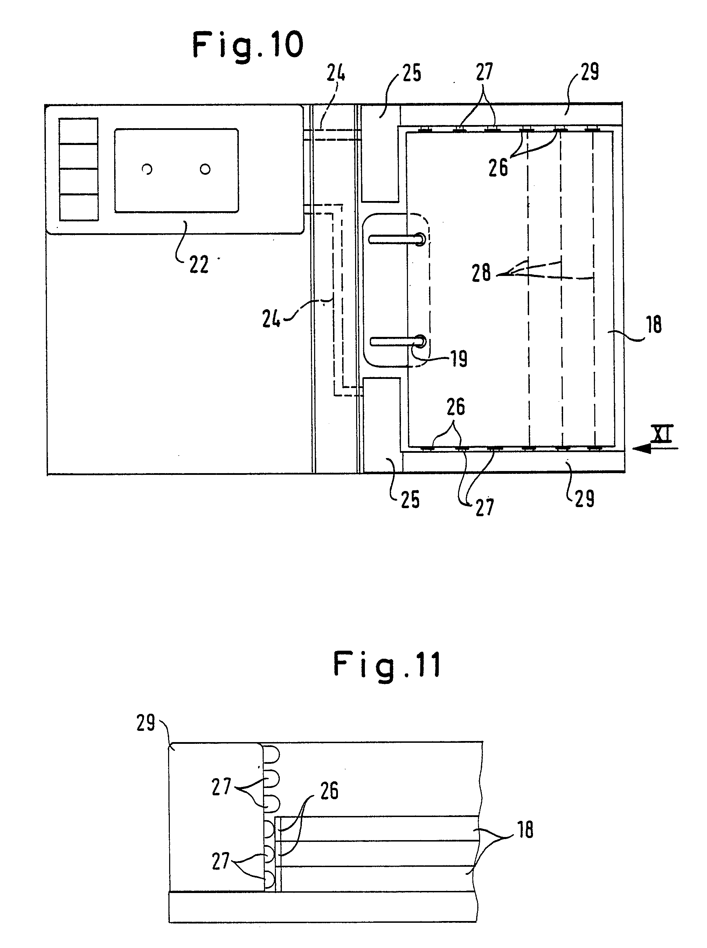

In Fig. 10 ist ein Bucheinband gezeigt, bei dem zur Seitenerkennung die Blätter 28 bzw. die Buchseiten beiderseitig elektrisch leitfähige Beschichtungen 26 besitzen und bei denen über entsprechende Kontakte 27 Steuergeräte 25 die jeweils aufgeschlagene Seite identifizieren. Mit 29 sind die zugeordneten Schaltkästen bezeichnet. Die gestrichelten Linien 28 deuten den Stromverlauf auf den elektrisch leitfähigen Beschichtungen zwischen den Kontakten 27 an. Die Steuergeräte 25 sind durch Leitungen 24 mit dem Abspielgerät 22 verbunden.

Fig. 11 zeigt eine Schnittansicht gemäß XI in Fig. 10. Dabei befinden sich drei Blätter 18, die mit elektrisch leitfähigen Beschichtungen 26 versehen sind, an den Kontakten 27, die am Schaltkasten 29 vorgesehen sind.

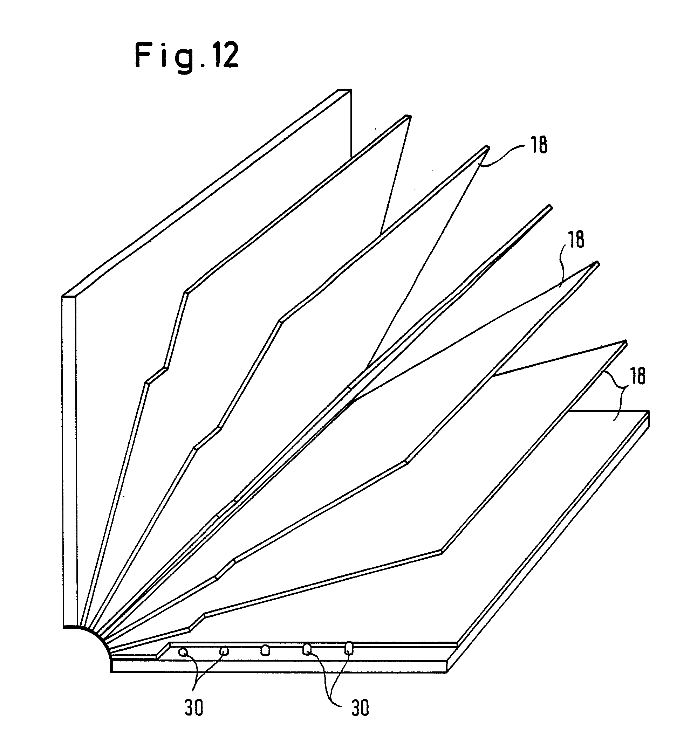

In Fig. 12 sind mechanische Schalter 30 vorgesehen, welche beim Umblättern durch entsprechende Ausnehmungen in den Blättern oder Buchseiten 18 betätigt werden. Da jedes Blatt 18 eine andere Ausnehmung besitzt, werden entsprechend jeder Seitenzahl unterschiedliche mechanische Schalter betätigt.

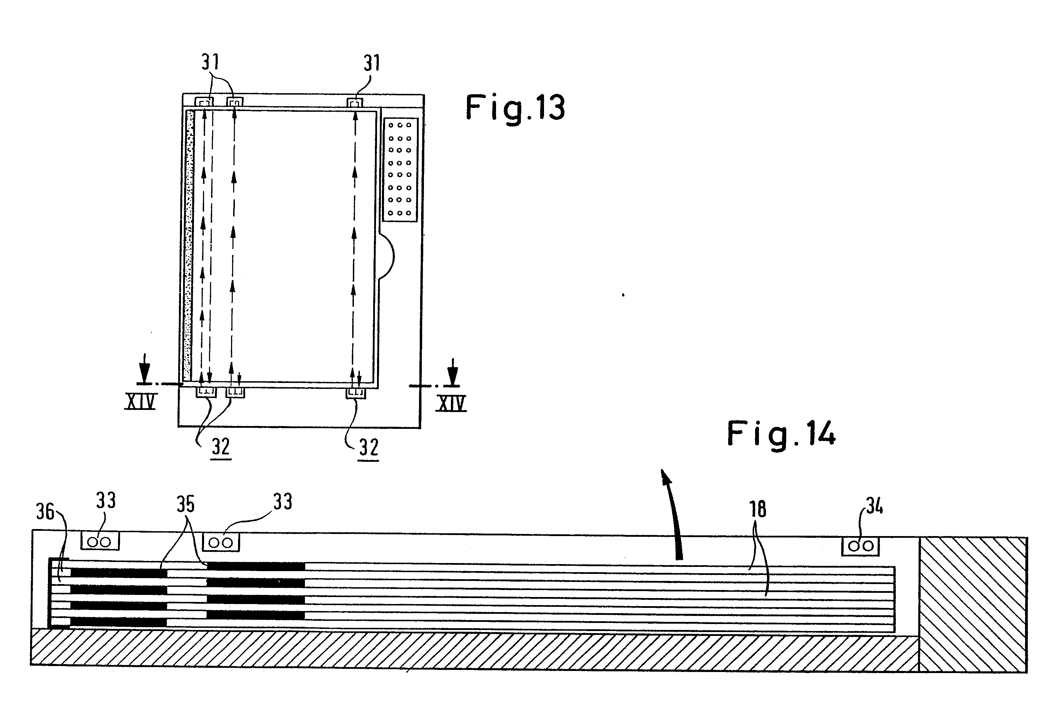

In einer anderen in den Figuren 13 und 14 gezeigten Ausführungsform kann die Steuerung des Tonbandgerätes beim Umblättern dadurch erfolgen, daß mehrere Infrarotlichtquellen vorgesehen sind und daß die Infrarotlichtstrahlen beim Umblättern des Text-und/oder Bilderblockes im Sinne einer Codezuordnung reflektiert werden. Dabei können drei Sensoren 32 für die Reflexion der Infrarotstrahlen vorgesehen sein, von denen ein Sensor 34 die Richtung des Umblättern im Sinne einer steigenden oder fallenden Seitennumerierung feststellt, während die beiden anderen Sensoren 33 die umgeblätterte Seitenanzahl registrieren. Diese drei aus den Infrarotlichtquellen und den Sensoren 32 gebildeten Lichtschranken können gegenüber der Stirnseite oberhalb des zugeklappten Buches angeordnet sein. Auch ist es möglich, drei zusätzliche Infrarotlichtempfänger 31 anzuordnen, durch die drei Felder definiert werden, wobei beim Umblättern die Unterbrechung in Form einer Tastenfunktion ausgewertet wird. Anstelle oder zusätzliche zu den Infrarotlichtschranken kann eine Ultraschallquelle vorgesehen sein, wobei ein Teil des Impulses der Ultraschallquelle von einer Buchseite durchgelassen und ein Teil reflektiert wird, so daß durch Zählung der Anzahl der Reflexionen die Anzahl der noch nicht aufgeschlagenen Buchseiten bestimmt wird.

Die in den Figuren 13 und 14 dargestellte Art der Seitenkennung arbeitet mit drei Reflexionsschranken. Diese bestehen jeweils z.B. aus einem Infrarotlichtsender und einem Infrarotlichtempfänger. Der Sender sendet ständig Infrarotlicht aus. Falls nun z.B. durch eine weiße Fläche 36 vor der Reflexionslichtschranke 32 der Infrarotlichtstrahl reflektiert wird, erhält der Empfänger ein Signal, das ausgewertet werden kann. Wie man aus Fig. 13 entnehmen kann, sind die drei Lichtschranken gegenüber der Stirnseite oberhalb des zugeklappten Buches angeordnet. Die einzelnen Buchseiten sind stirnseitig weiß und mit schwarzen, das Infrarotlicht nicht reflektierenden Flächen 35 bedruckt.

Wird nun eine Buchseite 18 aufgeblättert, wird zunächst die rechte Lichtschranke ausgelöst und danach, je nach Anordnung der schwarzen Fläche 35, eine der beiden linken Licht schranken. Wird dagegen eine Seite zugeblättert, wird zuerst eine der beiden linken Lichtschranken und dann erst die rechte Lichtschranke ausgelöst. Man kann also aus der Reihenfolge der Lichtschrankensignale die Umblätterrichtung ermitteln. Werden mehrere Buchseiten auf einmal umgeblättert, kann durch Zählen der Impulse der beiden linken Lichtschranken die Anzahl der umgeblätterten Seiten bestimmt werden. Durch das Anordnen von zwei zusätzlichen Infrarotlichtempfängern 31 kann man drei Felder definieren. Durch Auswerten der Unterbrechung des Infrarotlichtstrahles erhält man eine Tastenfunktion.

## Ansprüche

1. Vorrichtung zur audio-visuellen Kombination von Text-und Bildinhalten in Form eines Blockes aufeinanderliegender, bedruckter und beschriebener Seiten einerseits und Sprach-und Musikinhalten in Form eines Tonspeichers andererseits mit einer Aufnahme zum Einlegen eines Tonträgers in dieses Gerät, gekennzeichnet durch ein Gerät zum Einspannen des Blockes aufeinanderliegender Bedruckter und beschriebener Blätter, eine Abspieleinrichtung für den Tonträger in diesem Gerät, eine Einrichtung, die feststellt, welche Seite des Blockes aufgeschlagen ist und welche die Abspieleinrichtung veranlaßt, die dieser Seite zugeordnete Stelle des Tonträgers abzuspielen.

2. Vorrichtung nach Anspruch 1, in welcher der Tonträger eine Tonbandkassette ist und die Abspieleinrichtung einen Magnetkopf enthält, welcher das Tonband der Tonbandkassette abtastet.

3. Vorrichtung nach Anspruch 2, bei der die Abspieleinrichtung Mittel enthält, um das Tonband in schnellem Vor-und Rücklauf anzutreiben und bei der die Steuereinrichtung Mittel enthält, durch welche festgestellt wird, ob der Block im Sinne steigender oder fallender Seitenzahl umgeblättert wird und bei der dementsprechend das Tonband in schnellem Vorlauf bzw. im schnellen Rücklauf angetrieben wird, ferner bei der das Tonband eine Spur enthält, auf welcher magnetische Markierungen für den Beginn einer Seite des Blockes und der zugehörigen Text-bzw. Toninformationen vorgesehen sind, wobei die Abspieleinrichtung das Tonband in die normale Abspielgeschwindigkeit bei Erreichen der der aufgeschlagenen Seite entsprechenden Markierung umschaltet.

4. Vorrichtung nach einem der Ansprüche 1 bis 3, bei der die Steuereinrichtung mehrere lichtempfindliche Einrichtungen enthält, welche in unterschiedlicher Weise je nach der aufgeschlagenen Seite des Blockes zum Ansprechen kommen.

5. Vorrichtung nach Anspruch 4, bei der die Seiten des Blockes Lochungen oder Aussparungen enthalten, wobei, wenn mehrere derartige Aussparungen sich in Deckung befinden, die lichtempfindliche Einrichtung durch die so entstehende Öffnung einfallendes Licht erhält und anspricht.

6. Vorrichtung nach Anspruch 4, bei der die Steuereinrichtung mindestens eine Infrarotlichtquelle enthält und bei der je nach der aufgeschlagenen Seite des Blockes Infrarotlicht mehrerer Lichtwege codeartig reflektiert wird und bei der aus dem Ansprechen der lichtempfindlichen Elemente auf das Infrarotlicht die aufgeschlagene Seite ermittelt wird.

7. Vorrichtung nach Ansprüchen 1 bis 6, wobei das Gerät mindestens einen Lautsprecher enthält.

8. Vorrichtung nach Anspruch 1, wobei das Gerät eine Aufnahme für einen elektronischen Speicherchip enthält.

9. Vorrichtung nach Ansprüchen 1 bis 8, wobei die Vorderseite des Gerätes einen Flachlautsprecher aufnimmt und in der Vorderseite des Gerätes eine Durchbrechung vorgesehen ist, welche den Blick auf das Titelblatt des jeweils eingelegten Text-und/oder Bilderblockes freigibt.

10. Vorrichtung nach Anspruch 1, wobei die Seiten des Text-und/oder Bilderblockes über eine Ringheftung zusammengehalten sind, welche im Falz des in Form eines Bucheinbandes ausgestalteten Gerätes festgeklemmt ist und bei der auf der letzten Seite des Blockes eine Tonbandkassette angeheftet ist, die vor Inbetriebnahme in die entsprechende Halterung des in dem Bucheinband eingebauten Abspielgerätes eingesetzt wird.

11. Vorrichtung nach Anspruch 1, bei der zur Seitenerkennung die Buchseiten elektrisch leitfähige Beschichtungen besitzen und bei der über entsprechende Kontakte die Steuereinrichtung die jeweils aufgeschlagene Seite identifiziert.

12. Vorrichtung nach Anspruch 1, bei der jeweils zwei aufeinanderfolgende Blätter des Blockes an ihrem linken Rand mit mindestens einem Band verbunden sind, bei der das Gerät neben der linken Seiten des eingespannten Blockes eine lichtempfindliche Einrichtung besitzt, die auf die Lage des Bandes anspricht, wobei beim Umblättern der Blätter jeweils das Band oder die Bänder über die lichtempfindliche Einrichtung gezogen werden.

13. Vorrichtung nach Anspruch 1, bei der jeweils zwei aufeinanderfolgende Blätter des Blockes an ihrem linken Rand mit mindestens einem Band verbunden sind, bei der das Gerät neben der linken Seite des eingespannten Blockes eine lichtempfindliche Einrichtung besitzt, die auf eine Markierung desselben anspricht, wobei beim Umblättern der Blätter jeweils das Band oder die Bänder über die lichtempfindliche Einrichtung gezogen werden.

14. Vorrichtung nach Anspruch 1, bei der jeweils zwei aufeinanderfolgende Blätter des Blockes an ihrem linken Rand mit mindestens einem Band verbunden sind, bei der das Gerät neben der linken Seite des eingespannten Blockes eine lichtempfindliche Einrichtung besitzt, die auf eine Lochung desselben anspricht, wobei beim Umblättern der Blätter jeweils das Band oder die Bänder über die lichtempfindliche Einrichtung gezogen werden.

15. Vorrichtung nach Anspruch 14, bei der Fotozellen im Zusammenhang mit der Lochung der entsprechenden Seiten zwei verschiedene Funktionsgruppen bilden, wobei die eine Gruppe der zwei verschiedenen Funktionsgruppen zur Identifikation der aufgeschlagenen Seite und zur Ansteuerung der mit der Seite korrespondierenden Tonbandpassage dient und die Teile der zweiten Baugruppe als Antworttasten zur Ermöglichung eines aktiven und detaillierten Eingreifens des Anwenders dienen.

16. Vorrichtung nach Anspruch 1, bei der mechanische Schalter vorgesehen sind, welche beim Umblättern durch entsprechende Ausnehmungen in den Buchseiten betätigt werden.

17. Vorrichtung nach Anspruch 1, bei der mindestens eine Ultraschallquelle vorgesehen ist, wobei ein Teil des Impulses der Ultraschallquelle von den Blättern des Blockes durchgelassen und ein Teil reflektiert wird, so daß durch Zählung der Anzahl der Reflexionen die Anzahl der noch nicht aufgeschlagenen Buchseiten von der Steuereinrichtung bestimmt wird.

Fig.1

Fig.2

Fig.3

# Fig.4

Fig.5

Fig.7

18    19    20    18

21    16    4

Fig.6

21    20    20

16    20

19

18    18

19

16

VIII

20

VIII

5

4

Fig.8

16

20

23

0 262 616

Fig.9

0 262 616

# Fig.10

# Fig.11

# Fig.12

18

18

18

30          30

Fig.13

31          31

XIV                    XIV

32              32

Fig.14

36  33    35    33                    18        34

0 262 616